(19) Europäisches Patentamt
European Patent Office
Office européen des brevets

(11) **EP 2 175 261 A2**

(12) **EUROPÄISCHE PATENTANMELDUNG**

(43) Veröffentlichungstag:
**14.04.2010 Patentblatt 2010/15**

(51) Int Cl.:
*G01N 22/00* $^{(2006.01)}$    *G01N 22/04* $^{(2006.01)}$

(21) Anmeldenummer: **10000662.6**

(22) Anmeldetag: **24.09.2007**

(84) Benannte Vertragsstaaten:
**AT CH DE FR GB IT LI**

(30) Priorität: **29.09.2006   DE 102006046657**
**22.03.2007   DE 102007014492**

(62) Dokumentnummer(n) der früheren Anmeldung(en)
nach Art. 76 EPÜ:
**07817558.5 / 2 067 024**

(71) Anmelder: **Forschungszentrum Jülich GmbH**
**52425 Jülich (DE)**

(72) Erfinder:
• **Klein, Norbert**
**London SW7 2AZ (GB)**
• **Krause, Hans-Joachim**
**52499 Baesweiler (DE)**
• **Zander, Willi**
**52457 Aldenhoven (DE)**

Bemerkungen:
Diese Anmeldung ist am 22-01-2010 als
Teilanmeldung zu der unter INID-Code 62 erwähnten
Anmeldung eingereicht worden.

(54) **Identifikation einer Probe in einem Behälter, z.B. im Check-in Bereich bei der Reisegastabfertigung, durch Bestimmung der Resonanzfrequenz und der Güte eines dielektrischen Resonators, an dem der Behälter angeordnet wird**

(57) Die Erfindung betrifft ein Verfahren zur Identifikation einer Probe in einem Behälter mit den Schritten:
- der Behälter mit der Probe wird zu einem dielektrischen Resonator angeordnet,
- in den Resonator wird ein Hochfrequenzsignal zur Anregung einer resonanten Mode des Resonators eingekoppelt,
- die Resonanzkurve mindestens einer resonanten Mode wird gemessen,
- es wird zusätzlich die Güte ermittelt,
- **dadurch gekennzeichnet, dass**

- der dielektrische Resonator in einem metallischen Gehäuse angeregt wird, wobei eine Öffnung im metallischen Gehäuse in Richtung des Probenbehälters gerichtet ist, so dass die elektromagnetischen Felder in den Außenraum eindringen können und zumindest partiell die Probe in dem Probenbehälter zu durchdringen vermögen und
- aus der ermittelten Veränderung und Darstellung der Beziehung aus der reziproken Güte und der Resonanzfrequenz im Vergleich zu einer Messung ohne Probenbehälter die Probe identifiziert wird.
Eine Messvorrichtung hierzu ist offenbart.

Fig. 1

**Beschreibung**

Die Erfindung betrifft ein Verfahren zur Identifikation einer Probe in einem Behälter und eine Messvorrichtung hierzu.

Aus DE 43 42 505 C1 ist ein Verfahren und eine Vorrichtung zur Messung der komplexen Dielektrizitätskonstante eines Stoffes durch Auswertung der durch die Anwesenheit des Stoffes verursachten Verstimmung eines HF-Resonators bekannt, wobei eine HF-Sendeeinrichtung zum Senden hochfrequenter elektromagnetischer Felder mit variierbarer Frequenz in den HF-Resonator, eine Empfangseinrichtung für das Resonatorfeld und eine mit der Empfangseinrichtung verbundene Messschaltung vorhanden sind, wobei mit der Messschaltung die Amplitude der empfangenen Hochfrequenzsignale bestimmbar ist.

Es sind verschiedene Verfahren zur Bestimmung von dielektrischen Eigenschaften von Stoffen, die typischerweise als Dielektrizitätszahl $\varepsilon_r$ und Verlustwinkel $\tan(\delta)$ oder als komplexe Dielektrizitätskonstante $\varepsilon = \varepsilon' - i\varepsilon''$ angegeben werden, bekannt. Solche Verfahren finden zum Beispiel bei der Bestimmung der Feuchte von Stoffen Anwendung. Diese Verfahren beruhen auf der großen Dielektrizitätskonstante und dem großen Verlustfaktor des Wassers in dem Stoff und haben im industriellen Bereich große Bedeutung, beispielsweise bei der Feuchtemessung von Chemikalien, Nahrungsmitteln, Tabak, Kaffee, etc..

Bei den Resonanzverfahren zur Bestimmung der Feuchte mit Hilfe von Mikrowellen wird der zu untersuchende Stoff in einen Hohlraumresonator eingebracht und die durch die Anwesenheit des Stoffes bedingte Verstimmung des Hohlraumresonators gemessen, indem durch Variieren der eingestrahlten Frequenz die Resonanzkurve abgefahren und ausgemessen wird. Aus der Verschiebung der Resonanzfrequenz und der Vergrößerung der Resonanzhalbwertsbreite bzw. Güteänderung des Resonators lässt sich bei bekannter Stoffzusammensetzung und -dichte die Dielektrizitätskonstante und damit auch der Wassergehalt des Stoffes ableiten. Dazu bedarf es in der Regel Kalibrationskurven, die durch vorherige Messung der jeweiligen Substanz mit verschiedenen bekannten Feuchtegraden gewonnen werden. Bei den meisten bekannten Verfahren ist überdies eine gesonderte Messung der Materialdichte erforderlich.

Aus DE 40 04 119 A1 ist ein Verfahren zur Bestimmung der Materialfeuchte mit Hilfe eines Hohlraumresonators bekannt, das durch eine bestimmte Auswahl des Feldverlaufs des Hohlraumresonators im Bereich der zu untersuchenden Probe gestattet, Materialfeuchte und Materialdichte unabhängig voneinander für ein bekanntes Material unter Verwendung einer Kalibrationskurve zu bestimmen, wobei die durch Abfahren der Resonanzkurve ermittelte Resonanzfrequenz und die Halbwertsbreite der Resonanzlinie bestimmt und ausgewertet werden. Auch hier ist es notwendig, dass der zu untersuchende Stoff in Form einer Probe in den Hohlraumresonator eingebracht wird.

Aus dem Artikel "Ein Dielektrizitätskonstanten-Messplatz zur Untersuchung optischer Kristalle im Mikrowellenbereich" in: Kristall und Technik, Bd. 10, Nr. 6, 1975, S. 695-700, von E. Wehrsdorfer et al., ist ein ähnliches Verfahren wie das obige bekannt, bei dem die Dielektrizitätskonstante einer Probe durch die Belastung eines im Mikrowellenbereich betriebenen Hohlraumresonators durch die Probe bestimmt wird. Die durch die Anwesenheit der Probe in dem Hohlraumresonator bedingte Resonanzfrequenz- und Güteänderung wird durch Ausmessen der Resonanzkurve nach Einbringen der Probe in den Hohlraumresonator bestimmt.

Aus der DD-PS 1 38 468 ist ein Verfahren zur Messung der komplexen Dielektrizitätskonstanten von dielektrischen Platten bekannt, die einseitig metallisiert sind. Zur Messung wird ein dielektrischer Resonator auf die nichtmetallisierte Seite der Platte aufgelegt und in dem Resonator die $TE_{011}$-Mode angeregt. Die metallisierte Seite der Platte wirkt als Abschluss des resonanzfähigen Systems. Aus der Änderung der Resonanzfrequenz gegenüber dem Fall, bei dem der dielektrische Resonator auf eine Metallplatte aufgelegt ist, kann die Dielektrizitätskonstante des Plattenmaterials bei bekannter Dicke bestimmt werden.

Gewerblich erhältliche Feuchtesensoren erlauben heutzutage das Abscannen der Probe mit dem Sensor im Millisekundenbereich. Dabei kann kontinuierlich dichte- und gewichtsunabhängig die Produktfeuchte erfasst werden, wobei Änderungen in der Produkttemperatur automatisch kompensiert werden. Diese Verfahren werden z. B. bei der Herstellung von Produkten in der keramischen Industrie erfolgreich eingesetzt.

Nachteilig erschöpfen sich die genannten Verfahren basierend auf HF-Technologie in der Bestimmung der komplexen Dielektrizitätskonstanten einer Probe mit bekannten Abmessungen. Dies bedeutet, dass die Geometrie und die genauen Abmessungen der Probe bekannt sein müssen, um aus einer gemessenen Güte und Frequenzverschiebung den Real- und Imaginärteil der komplexen Dielektrizitätskonstante zu bestimmen.

Weiterhin nachteilig ist, dass zur Bestimmung der Dielektrizitätskonstanten ein Sensor mit der Probe in Berührung gebracht werden muss, was gerade bei gefährlichen Proben, wie z. B. Aceton oder anderen brennbaren Flüssigkeiten, vermieden werden sollte.

Aufgabe der Erfindung ist es, ein Verfahren und eine Vorrichtung bereit zu stellen, mit dem bzw. mit der eine Probe in einem Behälter identifiziert werden kann, ohne dass notwendigerweise der Behälter hierfür geöffnet werden muss.

Die Aufgabe wird durch ein Verfahren gemäß Hauptanspruch und durch eine Vorrichtung gemäß Nebenanspruch gelöst. Vorteilhafte Ausgestaltungen ergeben sich aus den darauf jeweils rückbezogenen Patentansprüchen.

Das erfindungsgemäße Verfahren zur Identifikation einer Probe in einem Behälter sieht die Durchführung der nachfolgend angegebenen Schritte vor:

- der Behälter mit der Probe wird derartig zu einem Resonator angeordnet, dass das resonante elektrische Feld des Resonators zumindest einen Teil der Probe im Behälter durchdringen kann,

- in den Resonator wird ein Hochfrequenzsignal zur Anregung einer resonanten Mode des Resonators eingekoppelt,

- die Resonanzkurve mindestens einer resonanten Mode wird mit und ohne Probenbehälter gemessen,

- aus der ermittelten Veränderung der Resonanzfrequenz wird die Probe identifiziert.

Durch das erfindungsgemäße Verfahren wird auf einfache und sehr schnelle Weise die Probe identifiziert, ohne dass der Behälter für die Probe hierzu geöffnet werden muss. Dadurch wird besonders vorteilhaft bei unbekannten Proben das Risiko einer Gefährdung von Menschen und Gegenständen durch gefährliche Proben, wie z. B. Säuren oder Aceton, minimiert. Das Verfahren ist in diesem Sinne besonders vorteilhaft ein kontaktloses Verfahren, da die Probe zwecks Identifikation nicht berührt werden muss.

Die Probe wird aus der ermittelten Veränderung der Resonanzfrequenz im Vergleich zu einer Messung ohne Probenbehälter, also gegen Luft, identifiziert.

Das erfindungsgemäße Verfahren ist ganz besonders vorteilhaft sehr zuverlässig bei der Unterscheidung von genießbaren zu ungenießbaren Flüssigkeiten und Feststoffen. Dies macht das Verfahren besonders interessant für den "check-in" Bereich bei der Reisegastabfertigung.

Das Verhalten von nicht metallischen Materialien wird gegenüber elektromagnetischen Wechselfeldern im Allgemeinen durch eine komplexe Dielektrizitätskonstante $\varepsilon_r = \varepsilon_1 + i\varepsilon_2$ beschrieben. Sowohl der Real- als auch der Imaginärteil sind im Allgemeinen frequenz- und temperaturabhängig. Bringt man eine Substanz mit gegebenem $\varepsilon_r$ in das elektrische Wechselfeld eines Resonators, so führt der Realteil ($\varepsilon_1$) zu einer Verschiebung der Resonanzfrequenz, der Imaginärteil ($\varepsilon_1$) zu einer Verringerung der Güte.

Das Absorptionsverhalten, insbesondere von Flüssigkeiten im Mikrowellenbereich, wird durch die Relaxation der Moleküle bei Auslenkung aus ihrer Gleichgewichtslage durch das elektrische Wechselfeld der eingekoppelten elektromagnetischen Welle beschrieben. Formal lässt sich das Verhalten durch eine komplexe, von der Frequenz $f$ des Wechselfeldes abhängigen Dielektrizitätskonstante $\varepsilon(f)$ beschreiben.

$$\varepsilon(f) = \varepsilon_1(f) + i \cdot \varepsilon_2(f) = \frac{\varepsilon_s - \varepsilon_\infty}{1 + i2\pi f\tau} \qquad (1)$$

mit $\varepsilon_s$ = statische Dielektrizitätskonstante;
$\varepsilon_\infty$ = optische Dielektrizitätskonstante; $\tau$ = Relaxationszeit; f = Anregungsfrequenz.

Gemäß oben stehender Gleichung unterscheiden sich unterschiedliche Flüssigkeiten markant durch die Werte der statischen Dielektrizitätskonstanten $\varepsilon_s$ sowie der Relaxationszeit $\tau$ Oberhalb einer Frequenz von $f = 1 / 2\pi\tau$ nimmt der Realteil von $\varepsilon$ stark ab und der Imaginärteil weist ein Maximum auf.

Mit der beschriebenen Methode gelingt es nun, Flüssigkeiten in beliebigen, nicht-metallischen Behältern anhand ihrer auf unterschiedlichen Werten von $\varepsilon_s$ , $\varepsilon_\infty$ und $\tau$ basierenden Eigenschaften innerhalb eines Zeitraums von ca. 100 Millisekunden zu identifizieren, ohne dass dabei der Behälter zu öffnen ist. Der Durchmesser des Behälters sollte dabei nicht viel kleiner als der Resonatordurchmesser sein, so dass gegebenenfalls zur Abdeckung aller möglichen Flaschengrößen mehrere Resonatoren mit unterschiedlichem Durchmesser zu verwenden sind.

Zur Durchführung des Verfahrens werden insbesondere flüssige Proben gewählt und identifiziert, wobei feste Proben aber nicht ausgeschlossen sind. Es ist denkbar, auch gasförmige Proben zu untersuchen.

Der Probenbehälter wird hierzu außerhalb des Resonators in einer Halterung mit vorzugsweise bekanntem Abstand zum Resonator angeordnet.

Bei gegebener Geometrie und Art des Materials des Resonators ist die Frequenz zur Anregung einer resonanten Mode des Resonators bekannt. Daher kann vorteilhaft auf einfache Weise ein Signal dieser Frequenz zur Anregung einer resonanten Mode des Resonators in diesen eingekoppelt werden.

Es werden Mikrowellen zur Anregung einer resonanten Mode gewählt, vorzugsweise in einem Bereich von 1 GHz bis 30 GHz. In diesem Bereich ist vorteilhaft, dass unterschiedliche Flüssigkeiten als Proben deutlich unterschiedliche Werte ihrer komplexen Dielektrizitätskonstante aufweisen. Weiterhin lassen sich in diesem Frequenzbereich kompakte dielektrische Resonatoren mit hohen Güten realisieren. Das resonante elektrische Feld einer Mode des Resonators durchdringt bei der Durchführung des erfindungsgemäßen Verfahrens zumindest einen Teil der Probe im Behälter.

Die Werte von Resonanzfrequenz und gegebenenfalls der Güte werden während des Verfahrens mit und ohne Probenbehälter aus der gemessenen Resonanzkurve ermittelt.

Im Rahmen der Erfindung wurde sodann erkannt, dass die alleinige Betrachtung der durch die Probe im Behälter resultierenden Änderung der Güte des Resonators in Abhängigkeit des Abstands der Probe zum Resonator zur eindeutigen Identifikation der zu untersuchenden Probe, insbesondere einer Flüssigkeit, auch dann unzureichend zu sein scheint, wenn der Abstand des Probenbehälters zum Resonator verändert und erneut gemessen wird.

Es wurde weiterhin erkannt, dass erfindungsgemäß zur Identifikation der Probe die Kenntnis der Änderung der Resonanzfrequenz ausreichend ist, um die Probe zu identifizieren.

Bei der alleinigen Messung der Resonanzfrequenz ist zu berücksichtigen, dass die Identifikation der Probe vorzugsweise die Kenntnis des Abstandes der Probe vom Resonator erfordert. Dies bedeutet, dass für unterschiedliche geformte Behälter, die in die Halterung eingelegt werden, der Abstand messtechnisch erfasst werden muss und auf einen vorgegebenen Wert einzustellen ist. Die alleinige Messung der Resonanzfrequenz reicht somit bei standardisierten Probenbehältern aus. Bei unterschiedlich geformten Probenbehältern könnten aufgrund unterschiedlicher Dicken der Behälterwände Fehlinterpretationen auftreten.

In einer vorteilhaften Ausgestaltung der Erfindung wird während des Verfahrens auch die Güte und, ganz besonders vorteilhaft, insbesondere die reziproke Güte ermittelt und zur Resonanzfrequenz in Beziehung gesetzt und dargestellt.

Auf diese Weise wird ganz besonders vorteilhaft bewirkt, dass die Eindeutigkeit und Selektivität bei der Identifikation der Probe erhöht wird, und zwar mittels einer einzigen Messung der Resonanzkurve mit Probenbehälter und ohne Probenbehälter (gegen Luft), wobei der Abstand des Probenbehälters zum Resonator unerheblich ist. Ganz besonders vorteilhaft wird ferner bewirkt, dass mittels der Darstellung des Ergebnisses, eine extrem einfache und zuverlässige Unterscheidung von gefährlichen zu ungefährlichen Proben auch für ungeübtes Personal ermöglicht wird.

Für eine eindeutige und selektive Identifikation sollten daher beide Parameter, das heißt die Veränderung der Resonanzfrequenz und der Güte, zueinander in Beziehung gesetzt werden. Dann ist eine einzige Messung mit und ohne Probe auch ohne eine genaue Kenntnis des Abstandes des Probenbehälters von dem Resonator zur Identifikation der Probe ausreichend.

Die Ermittlung der durch die Probe veränderten reziproken Güte und Resonanzfrequenz sowie die Darstellung der Beziehung aus reziproker Güte und Resonanzfrequenz ist dabei besonders geeignet, sehr schnell eine Identifikation der Probe unabhängig von der Art des Probenbehälters vorzunehmen.

Insbesondere können durch diese Beziehung vorteilhaft ungenießbare von genießbaren Flüssigkeiten oder allgemein gesprochen, gefährliche von ungefährlichen Proben unterschieden werden.

Besonders vorteilhaft ist aufgrund des linearen Zusammenhangs zwischen Resonanzfrequenz und reziproker Güte bei der Messung beider Größen die Identifikation der Probe unabhängig vom Abstand zwischen Probe und Resonator möglich.

Dies führt dazu, dass die Identifikation von Flüssigkeiten für alle Behälterformen ohne genaue Kenntnis des Abstandes durchgeführt werden kann. Dies bedeutet, dass dann eine Halterung für den Probenbehälter mit einem festen Abstand zum Resonator zur Identifikation von Flüssigkeiten bzw. der Probe in beliebig geformten Behältern gewählt werden kann.

Somit kann im Rahmen einer störungstheoretischen Betrachtung festgehalten werden, dass das Verhältnis aus der Veränderung der Resonanzfrequenz und der Veränderung der reziproken Güte des Resonators weitgehend unabhängig von der Behältergeometrie und auch vom Abstand des Behälters zum Resonator ist.

Insbesondere das resultierende Verhältnis aus reziproker Güte und Änderung der Resonanzfrequenz ist demnach zur Identifikation der Probe geeignet.

Als Resultat dieser Betrachtungen folgt:

$$\frac{\Delta(1/Q)}{\Delta f / fr} = const. \qquad (2)$$

Dies bedeutet, dass die bei verschiedenen Abständen gemessenen reziproken Güten weitgehend linear von der Resonanzfrequenz abhängen, und die Steigungen der daraus resultierenden Geraden charakteristisch für die Substanz sind.

Es können daher sehr vorteilhaft kleine und große, glatte wie raue, eckige und bauchige oder wie auch immer anders geartete geschlossene Behälter, Flaschen, Dosen, Kanister und so weiter auf ihren Inhalt geprüft werden, ohne dass diese geöffnet werden müssen und ohne dass diese in verschiedenen Abständen zum Resonator durchgemessen werden müssen.

Es kann ohne weitere Einschränkung ein Probenbehälter oder Gegenstände aus Glas oder aus Plastik oder auch aus einer Keramik mit oder ohne eine teilweise Metallisierung und mit oder auch ohne Etiketten untersucht werden, so lange nur gewährleistet ist, dass die Wand des Probenbehälters in unmittelbarer Nähe des Resonators nicht metallisiert ist bzw. das resonante elektrische Feld des Resonators die Probe im Behälter zumindest teilweise durchdringen kann.

In einer Ausgestaltung der Erfindung werden zur Identifikation der Probe mehrfach die Resonanzkurven gemessen und jeweils die Resonanzfrequenz und gegebenenfalls auch die Güte des Resonators aus den Resonanzkurven ermittelt und zueinander in Beziehung gesetzt.

Diese Messungen können in einer weiteren Ausgestaltung der Erfindung mit jeweils verschiedenem Abstand der Probe zum Resonator durchgeführt werden. Dabei wird vorzugsweise die Position des oder der Resonatoren zur Veränderung des Abstandes zur Probe verschoben.

Es ist aber auch möglich, verschiedene resonante Moden desselben Resonators nacheinander anzuregen und so die Identifikation der Probe bei erhöhter Selektivität vorzunehmen.

Durch Messungen bei unterschiedlichen Frequenzen gewinnt das Verfahren vorteilhaft aufgrund der starken Frequenzabhängigkeiten der komplexen Dielektrizitätskonstante vieler Flüssigkeiten nochmals an Eindeutigkeit und Selektivität.

Durch Anregung verschiedener resonanter Moden werden vorteilhaft die zur jeweiligen Mode gehörenden Resonanzkurven des Resonators gemessen.

Besonders vorteilhaft wird ein Verfahren durchgeführt, bei dem die resonanten Moden mehr als eines Resonators angeregt werden. Es können so während des Verfahrens beispielsweise verschiedene resonante Moden baugleicher Resonatoren angeregt werden. Es können aber genauso gut die gleichen resonanten Moden bauungleicher Resonatoren angeregt werden.

Bei mehrfachen Messungen wird durch die freie Kombination der Parameter aus

- verschiedenem Abstand der Probe zum Resonator,

- geeigneter Wahl eines oder mehrerer Resonatoren,

- nacheinander durchgeführten Anregungen unterschiedlicher resonanter Moden eines Resonators,

- und / oder aus einer Anordnung mehrerer baugleicher Resonatoren, deren unterschiedliche resonante Moden angeregt werden,

- und / oder aus einer Anordnung mehrerer bauungleicher Resonatoren, deren identische resonante Moden angeregt werden,

eine große Variationsmöglichkeit bereitgestellt, in der das Verfahren durchgeführt werden kann.

Mehrfache Messungen während des Verfahrens, insbesondere nach einer Änderung des Abstandes des Probenbehälters zum Resonator führen ebenfalls zu einer exakten Identifikation der Probe und so zu einer einwandfreien Einordnung der Probe in genießbare oder in ungenießbare oder, allgemein gesprochen, in gefährliche oder ungefährliche Proben bzw. Flüssigkeiten.

Die erfindungsgemäße Vorrichtung zur Durchführung eines Verfahrens umfasst mindestens einen Resonator und eine Halterung für einen Probenbehälter sowie ein erstes Mittel zur Anregung einer resonanten Mode des mindestens einen Resonators, wobei der Resonator und die Halterung derartig zueinander angeordnet werden können, dass nach Anregung einer resonanten Mode des Resonators das resonante elektrische Feld des Resonators eine Probe in einem Probenbehälter zumindest partiell zu durchdringen vermag, sowie ein zweites Mittel zur Messung der Resonanzkurve des Resonators. Die Vorrichtung ist **dadurch gekennzeichnet, dass** sie ein drittes Mittel zur Ermittlung der Resonanzfrequenz umfasst.

Die Probe bzw. der Probenbehälter stellt selbstverständlich keinen Bestandteil der erfindungsgemäßen Vorrichtung dar.

Die Resonanzfrequenz wird vorzugsweise durch das dritte Mittel in Abhängigkeit des Abstands eines Probenbehälters zum Resonator auch dargestellt z. B. auf einem Bildschirm.

Der Abstand zwischen Probenbehälter und Resonator kann während des Verfahrens derartig gewählt werden, dass Güten zwischen 100 und 1000 resultieren. Güten in diesem Wertebereich sind leicht messbar und die Selektivität bei der Unterscheidung von insbesondere Flüssigkeiten sehr gut. In diesem Zusammenhang kann der Abstand in einem Bereich zwischen 0 und 5 Millimeter liegen. Demgemäß ist die Halterung für den Probenbehälter in der Vorrichtung zu konzipieren und zu dem Resonator anzuordnen.

Die Vorrichtung ist in einer weiteren Ausgestaltung der Erfindung derartig ausgeführt, dass der Abstand zwischen der Halterung für den Probenbehälter zu dem Resonator vorzugsweise im Millimeterabstand veränderbar ist.

Durch mehrfache Messungen bei unterschiedlichem Abstand des Probenbehälters zum Resonator wird besonders vorteilhaft bewirkt, dass eine Identifikation der Probe gewährleistet ist, ohne weitere Parameter, wie z. B. die Veränderung der Güte, berechnen zu müssen. Die so erhaltenen Resonanzfrequenzkurven in Abhängigkeit vom Abstand der Probe zum Resonator erlauben über die Steigung der Kurve eine Identifikation der Probe.

Die Vorrichtung weist in einer Ausgestaltung der Erfindung einen Mikrowellenoszillator, insbesondere einen durchstimmbaren Mikrowellenoszillator oder einen breitbandigen Verstärker mit Resonator in Rückkoppelschaltung als erstes Mittel zur Anregung einer resonanten Mode des Resonators auf.

Die Vorrichtung umfasst in einer weiteren Ausgestaltung der Erfindung eine Detektordiode oder einen bolometrischen Leistungsdetektor oder einen Heterodyn-Empfänger als zweites Mittel zur Messung der Resonanzkurve einer oder mehrerer Schwingungsmoden, aus denen die jeweiligen Resonanzfrequenzen und gegebenenfalls Güten ermittelt werden.

In einer weiteren besonders vorteilhaften Ausgestaltung der Erfindung umfasst die Vorrichtung einen Netzwerkanalysator, insbesondere einen vektoriellen Netzwerkanalysator. Netzwerkanalysatoren im Sinne der Erfindung umfassen sowohl einen durchstimmbaren Mikrowellenoszillator als auch einen Heterodyn-Empfänger als erstes bzw. zweites Mittel der Vorrichtung.

Die Vorrichtung kann als drittes Mittel einen PC mit geeigneter Software umfassen. Die Software ermittelt aus der Resonanzkurve die Resonanzfrequenz.

Die Software ist vorteilhaft Bestandteil eines PC oder eines Netzwerkanalysators und gibt vorteilhaft die Resonanzfrequenz in Abhängigkeit vom Abstand zwischen Probenbehälter und Resonator auf einen Bildschirm aus.

Besonders vorteilhaft ermittelt das dritte Mittel auch die Güte des Resonators mit und ohne Probe. Dabei entspricht die Resonanzfrequenz der Frequenz, bei der ein Maximum der resonanten Amplitude auftritt. Die Güte ergibt sich aus dem Verhältnis von Resonanzfrequenz und Halbwertsbreite der Resonanzkurve.

In einer weiteren ganz besonders vorteilhaften Ausgestaltung der Erfindung stellt das dritte Mittel der Vorrichtung die ermittelte Resonanzfrequenz als Funktion der gemessenen reziproken Güte auch dar, so dass eine schnelle Identifikation der Probe bei hoher Selektivität erfolgt.

Die Software als drittes Mittel führt diese Schritte selbständig nacheinander aus.

Die Software kann besonders vorteilhaft derartig ausgestaltet sein, dass zur Identifikation einer Probe der Gütewert, insbesondere der reziproke Gütewert und die Resonanzfrequenz, mit und ohne Probenbehälter aus der gemessen Resonanzkurve berechnet wird. Die Software ermittelt im Anschluss hieran das Verhältnis aus der Änderung der Resonanzfrequenz und der Änderung der reziproken Güte in Bezug auf den Wert ohne einen Probenbehälter. Diese Zahl gibt die Steigung der Geraden an.

Über die Genießbarkeit oder Ungenießbarkeit einer Probe entscheidet die Software im einfachsten Fall ausschließlich über die Steigung der ermittelten Geraden.

Die Software kann vorteilhaft sodann das Ergebnis vorzugsweise über eine Meldung am Bildschirm ausgeben.

Die Software ist vorzugsweise dergestalt, dass sie eine geeignete graphische Darstellung und Zuordenbarkeit der Probe in genießbare und ungenießbare Proben auf einem Ausgabegerät, wie einem Bildschirm oder Drucker, ermöglicht. Die Software gibt hierzu vorzugsweise ausgehend vom Nullwert ohne Probe einen Bereich an Steigungen an, der charakteristisch für genießbare Flüssigkeiten oder Feststoffe ist. Sobald eine Flüssigkeit oder ein Feststoff außerhalb dieses Bereiches identifiziert ist, wird dies in geeigneter Weise z. B. optisch dargestellt.

Es ist denkbar, dass innerhalb der Vorrichtung der Resonator in einem metallischen Gehäuse mit mindestens einer Öffnung angeordnet ist. Die Öffnung des Gehäuses für den Resonator ist zum Probenbehälter hin gerichtet. Die Öffnung des Gehäuses ist für die elektromagnetischen Felder des Resonators durchlässig.

Insbesondere dielektrische Resonatoren auf der Basis verlustarmer Mikrowellenkeramiken mit hoher relativer Dielektrizitätszahl $\varepsilon_r$ weisen auch bei teilweise offenen Geometrien hohe Güten auf. Die $TE_{01\delta}$-Resonanz, charakterisiert durch ein azimutal umlaufendes E-Feld und ein axiales dipolares H-Feld, ist im Falle einer hohen Dielektrizitätszahl der zylindrischen Keramik im Allgemeinen sehr stabil. Das Gleiche gilt auch für höher indizierte $TE_0$-Resonanzen, deren Feldverteilungen rotationssymmetrisch ebenfalls Rotationssymmetrie aufweisen. Durch die Öffnung im Metallgehäuse wird gewährleistet, dass die elektrischen Felder des Resonators die Probe partiell durchdringen können.

Im Rahmen der Erfindung ist es auch vorstellbar, so genannte "Whispering-Gallery Resonanzen", das heißt Hybridresonanzen mit hohem azimutalen Modenindex $n$ (typischerweise größer $n=8$), die sehr geringe Abstrahlungsverluste aufweisen und teilweise sogar ganz ohne Gehäuse betrieben werden können, einzusetzen.

Der Abstand der Halterung für den Probenbehälter zum Resonator kann wenige Millimeter bis Zentimeter betragen, je nach Abmessungen, Geometrie der Probenbehälter und gewählter Mode des Resonators.

Zwecks einer genauen Ausrichtung des Probenbehälters weist die Halterung für den Probenbehälter mindestens zwei V-Nuten auf.

Dann können beispielsweise Behälter wie Flaschen oder auch Dosen oder auch Kanister exakt waagerecht zu ihrer Längsachse ausgerichtet werden, so dass die Achse eines Resonators die Achse des Behälters im rechten Winkel schneidet.

Die erfindungsgemäße Vorrichtung ist aber nicht auf diese Ausführungsform beschränkt.

Besonders vorteilhaft ist eine Vorrichtung, bei der ein Probenbehälter auf eine abgeschrägte Fläche der Halterung gelegt wird und die Position des Behälters auf dieser abgeschrägten Fläche durch eine senkrecht dazu stehende Auflagefläche der Halterung fixiert wird.

In diesem Fall können besonders vorteilhaft zwei Resonatoren, einer mit der Blende parallel zur abgeschrägten Fläche der Halterung, der zweite senkrecht dazu unterhalb des Bodens des Probenbehälters angeordnet werden, so dass die Identifikation der Probe sowohl durch die Seitenwände des Probenbehälters als auch durch den Boden des Probenbehälters erfolgt.

Dadurch wird besonders vorteilhaft bewirkt, dass einerseits bei nur teilweise mit Probenmaterial gefüllten Probenbehältern der unter der abgeschrägten Fläche angebrachte Resonator ein möglichst großes Volumen der Probe erfasst, was zur Erhöhung der Genauigkeit und Reproduzierbarkeit der Messung beiträgt. Andererseits dient der unter dem Boden des Probenbehälters angeordnete Resonator besonders vorteilhaft zur Identifikation der Probe in Behältern mit geringem Durchmesser.

Der Winkel der abgeschrägten Fläche der Halterung zur Horizontalen und damit der Winkel, den der Probenbehälter zur Horizontalen einschließt, sollte vorzugsweise zwischen 20 und 50 Grad liegen.

Vorteilhaft weist die Vorrichtung einen zylinderförmigen dielektrischen Resonator auf. Dadurch wird besonders vorteilhaft bewirkt, dass aufgrund der hohen Symmetrie viele Moden hohe Güten aufweisen. Im Gegensatz zu Kugeln oder Halbkugeln, bei denen ebenfalls hohe Güten auftreten, lassen sich zylinderförmige dielektrische Resonatoren leicht herstellen und sind zudem kommerziell erhältlich.

In einer weiteren Ausgestaltung der Erfindung kann die Vorrichtung **dadurch gekennzeichnet sein, dass** der Resonator zentralsymmetrisch in dem metallischen Gehäuse angeordnet ist.

Das metallische Gehäuse kann zylinderförmig ausgeführt sein.

Die Öffnung im Gehäuse des Resonators kann durch eine zentrale, kreiszylindrische Blende realisiert sein.

Der Probenbehälter und das Gehäuse für den Resonator sind vorteilhaft derartig zueinander positioniert, dass der tiefste Punkt des Behälters oberhalb der Mitte der Öffnung des Gehäuses bzw. des Resonators angeordnet ist. Die hohe Symmetrie dieser Anordnung führt dazu, dass mögliche Abstrahlungsverluste des Resonators minimiert werden, und dadurch mögliche Abweichungen vom linearen Zusammenhang zwischen reziproker Güte und Resonanzfrequenz minimiert werden.

Die Vorrichtung umfasst vorteilhaft einen durchstimmbaren Mikrowellenoszillator zur Einkoppelung von Mikrowellen in den Resonator und Anregung der resonanten Mode. Hierdurch sind vorteilhaft wiederum mehrfache Messungen der Resonanzfrequenz und der Güte möglich.

In einer besonders vorteilhaften Ausgestaltung der Erfindung umfasst die Vorrichtung einen Netzwerkanalysator zur Erzeugung der Mikrowellen und zur Aufzeichnung der Resonanzkurve, aus der Resonanzfrequenz und Güte bestimmt wird.

Die Vorrichtung kann in einer weiteren Ausgestaltung der Erfindung mehrere Resonatoren umfassen, und somit eine Messstation mit einer Vielzahl an baugleichen und / oder bauungleichen Resonatoren ausbilden.

Bauungleiche Resonatoren im Sinne der Erfindung sind z. B. Resonatoren mit einem unterschiedlichen Durchmesser.

Die Vorrichtung umfasst dabei vorteilhaft mehrere Resonatoren, welche derartig zueinander angeordnet sind, dass sie die Form des Probenbehälters abbilden. Sollte beispielsweise das Verfahren zur Identifikation des Inhalts eines Teil eines Schuhs als Probe durchgeführt werden, so könnten beispielsweise zwei Resonatoren für den Schuhabsatz, ein Resonator für die Schuhspitze und beispielsweise zwei weitere Resonatoren für den Rest der Sohle in der Messstation angeordnet sein. Dabei müsste eine Person als Träger des Schuhs diesen zwecks Untersuchung nicht mehr auszuziehen. Vorteilhaft könnten auf diese Weise Röntgenuntersuchungen von ausgezogenen Schuhen z. B. im "check-in" Bereich zur Abfertigung von Reisegästen ersetzt werden, durch das zur qualitativen Aussage fähige erfindungsgemäße Verfahren.

Im Weiteren wird die Erfindung an Hand von Ausführungsbeispielen und der beigefügten Figuren näher beschrieben.

Es zeigen:

Fig. 1: Ausführungsbeispiel einer erfindungsgemäßen Vorrichtung.

Fig. 2: Transmissionsspektrum eines dielektrischen Resonators mit aufgelegter flüssigkeitsgefüllter Flasche.

Fig. 3: Aus der gemessenen Resonanzkurve ermittelte Güte als Funktion des Abstandes z der Flasche von der Deckelblende, für verschiedene Flüssigkeiten und verschiedene Flaschentypen.

Fig. 4: Aus der gemessenen Resonanzkurve ermittelte Resonanzfrequenz als Funktion des Abstandes z der Flasche von der Deckelblende, für verschiedene Flüssigkeiten und verschiedene Flaschentypen.

Fig. 5: Erfindungsgemäßer Zusammenhang aus gemessener Resonanzfrequenz als Funktion der reziproken Güte für verschiedene Abstände z, verschiedene Flüssigkeiten und verschiedene Flaschentypen und -formen. Die Messpunkte für die leere PET-Flasche sind hinter den Messpunkten für die leere Glasflasche verborgen.

Fig. 6: Weiteres Ausführungsbeispiel einer erfindungsgemäßen Vorrichtung.

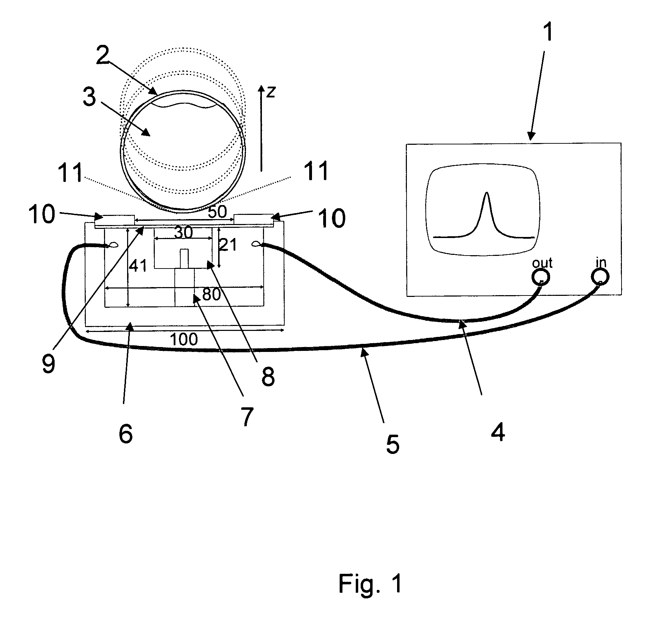

Die erfindungsgemäße Vorrichtung umfasst gemäß eines ersten Ausführungsbeispiels der Erfindung einen dielektrischen Resonator 8, der innerhalb eines mindestens von einer Seite her geöffneten metallischen Gehäuses 6 aus Aluminium angeordnet ist (Fig. 1).

Der dielektrische Resonator 8 besteht aus der Mikrowellenkeramik Barium-Zirkonium-Titanat (BZT) mit $\varepsilon_r = 2$ 8. Hieraus wurde ein zylindrischer dielektrischer Mikrowellenresonator realisiert, der in einem halboffenen Metallgehäuse 6 angeordnet ist. Die zylindrische Spezialkeramik für Mikrowellen (Radius $\alpha = 15$ mm, Höhe $H = 21$ mm, Bohrung 4 mm) ist auf einem Teflonhalter 7 angeordnet, welcher in einen halboffenen Aluminiumzylinder (Außendurchmesser 100 mm, Innendurchmesser 80 mm, Höhe 54 mm) eingeschraubt ist. Der Resonator wird mit einem Deckel 9 aus 1 mm starker Teflonfolie abgedeckt. Daraus ergibt sich eine sinnvolle Fixierung des Resonators 8 im Gehäuse 6 und ein Schutz des Resonators 8 gegenüber Verschmutzung. Das halboffene zylindrische Aluminiumgehäuse 6 des Resonators 8 wurde zusätzlich mit einer Aluminium-Deckelblende 10 mit einem Außendurchmesser von 90 mm, und einem Innendurchmesser von 50 mm abgedeckt, um die Güte des Resonators zu erhöhen. Beidseitig zur Resonatorkeramik befinden sich koaxiale Ein- und Auskoppelleitungen 4, 5 mit je einer ca. 3 mm großen Einkoppelschleife mit der Flächennormalen in axialer Richtung. Links befindet sich die koaxiale Einkoppelleitung mit einer ca. 3 mm großen Einkoppelschleife (Flächennormale in z-Richtung), rechts eine gleich große und gleich orientierte Schleife zur Auskopplung. Die Resonanzfrequenz der TE$_{01\delta}$-Mode des Keramikzylinders kann näherungsweise mit der Formel

$$f_0\,[GHz] \approx \frac{34}{a\,[mm]\sqrt{\varepsilon_r}}\left(\frac{a}{H} + 3.45\right) \qquad (3)$$

ermittelt werden. Mit den oben angegebenen Geometrie-Parametern folgt $f_0 = 1{,}78$ GHz als Anregungsfrequenz des Resonators 8.

Eine Flasche 2 mit einer Flüssigkeit 3 als Probe wird in variablem Abstand z (gestrichelte Kreise) von der Deckelblende 10 gemessen.

Der Resonator 8 wurde mit seinen beiden koaxialen Koppelleitungen 4, 5 an den Reflexions- und Transmissions-Port eines vektoriellen Netzwerkanalysators 1 (Hewlett Packard 8752A) angeschlossen. Die frequenzabhängige Transmission wurde mit einer HF-Ausgangsleistung von 0 dBm gemessen. Zur Durchführung der Messung wurde die flüssigkeitsgefüllte Flasche in verschiedenen Abständen z vom Resonator positioniert. Um eine wohldefinierte und bekannte abstandsabhängige Messung durchzuführen, wurde eine zweiarmige Halterung mit zwei V-förmigen Nuten 11 aus PVC gefertigt, von der in Fig. 1 eine außerhalb der Bildebene dargestellt ist. In die beiden V-förmigen Nuten 11 können somit Flaschen 2 verschiedener Form und Oberflächenbeschaffenheit eingelegt werden. Flasche 2 wurde mittels eines Stativs so justiert, dass die Flaschenwand auf der Metall-Deckelblende 10 des Resonators 8 aufliegt. Dabei liegt der tiefste Punkt der Flasche 2 möglichst über der Mitte des dielektrischen Resonators 8.

Natürlich kann die Anordnung aber auch um neunzig Grad gekippt werden, wobei darauf zu achten ist, dass im Bereich des geringsten Abstands zwischen Resonator und Flaschenrand die Flüssigkeit bis zur Wand der Flasche reicht, so dass das elektrische Feld die Flüssigkeit durchdringt.

Die Flasche 2 wurde symmetrisch derartig zum Resonator 8 positioniert, dass die Resonatorachse die Flaschenachse im rechten Winkel schneidet. Dann wurde die Flasche 2 mittels einer Mikrometerschraube in 1 mm-Schritten vertikal vom Resonator 8 wegbewegt. An jeder Position wurde jeweils eine Bestimmung der Resonanzfrequenz und der Güte durchgeführt.

Zur Identifikation des Flascheninhaltes werden demnach Güte und Resonanzfrequenz der angeregten Mode gemessen. Durch mehrfache Erhebung der Messwerte für verschiedene Abstände der Flasche 2 vom Resonator 8 erfolgt eine noch eindeutigere Identifikation verschiedener Flüssigkeiten.

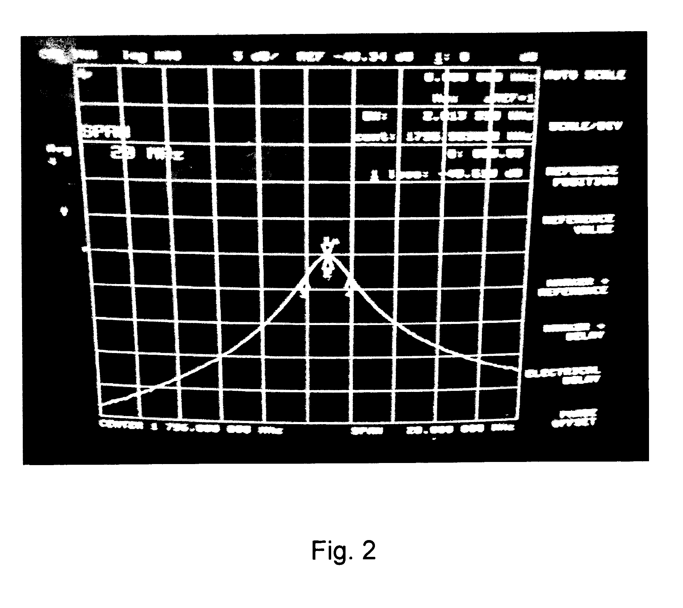

Fig. 2 zeigt ein typisches gemessenes Reflektionsspektrum einer flüssigkeitsgefüllten Flasche. Die Sweep-Bandbreite des HP 8752A wurde je nach Breite der Resonanz zu 10 MHz, 20 MHz oder 50 MHz gewählt.

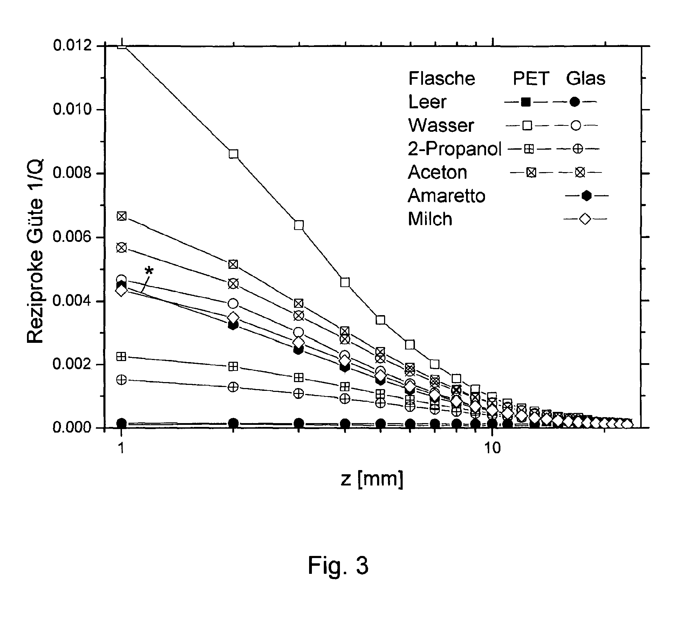

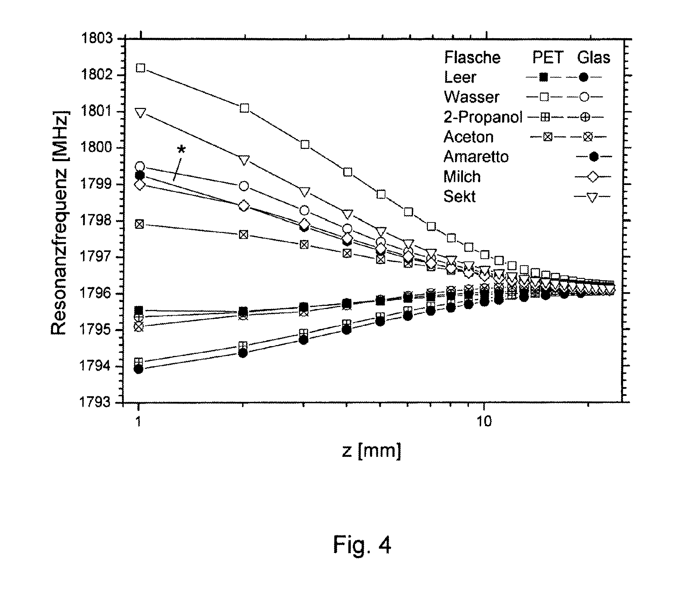

Fig. 3 und Fig. 4 zeigen die jeweils erhobenen Messwerte in Bezug auf die ermittelte reziproke Güte und die ermittelte Resonanzfrequenz in Abhängigkeit vom Abstand der Flasche 2 zum Resonator 8. Der Abstand z ist dabei in logarithmischer Darstellung angegeben.

Als PET-Flasche wurde hierzu eine handelsübliche 1-Liter Flasche der Marke Coca Cola® für alle dargestellten Ergebnisse gewählt.

Als Glasflasche wurde, sofern nichts anderes angegeben ist, eine handelsübliche 0,7-Liter Wasserflasche mit genoppter Oberfläche verwendet.

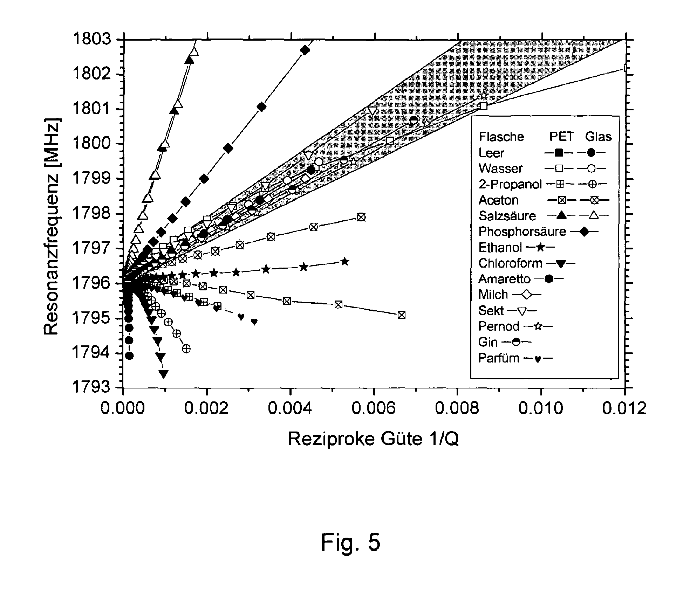

In den Fig. 3 und 4 sind mit jeweils ausgefüllten Kreisen und Quadraten luftgefüllte Flaschen aus Polyethylen (PET-Flasche: Quadrat) und Glas (Kreis) in Abhängigkeit vom Abstand der Flasche vom Resonator dargestellt. Die eigentliche Referenz stellt aber wiederum eine Messung gegen Luft dar, das heißt ohne Probenbehälter. Selbiges gilt auch für die Ergebnisse zu der Fig. 5 (s.u.).

Neben Leitungswasser (leeres Quadrat: PET-Flasche, leerer Kreis: Glasflasche), wurden die Güte als auch die Resonanzfrequenz von 2-Propanol (senkrechtes Kreuz in Quadrat: PET-Flasche; senkrechtes Kreuz in Kreis: Glasflasche), Aceton (diagonales Kreuz in Quadrat: PET-Flasche; diagonales Kreuz in Kreis: Glasflasche), Mandellikör (schwarz ausgefüllte 8-eckige Kreise, Linien in Fig. 3 und Fig. 4 zwecks Unterscheidbarkeit mit "*" markiert, handelsübliche rechteckige Glasflasche der Marke Venezi® mit starker Oberflächenrauigkeit), 3,5 % fetthaltige Milch (nicht ausgefüllte Raute) und für die Messung der Resonanzfrequenz zusätzlich auch Sekt (abwärts zeigendes nicht ausgefülltes Dreieck) durchgemessen. Die Messungen mit Sekt und Milch wurden wiederum in handelsüblichen 0,7 Liter Wasserflaschen, wie oben dargestellt, durchgeführt.

Beide Größen, Resonanzfrequenz und Güte, nehmen mit zunehmendem Abstand zwischen Flasche und Resonator kontinuierlich ab.

Die genießbaren Getränke (Wasser, Likör, Milch, Sekt) weisen jeweils höhere Resonanzfrequenzen auf als die ungenießbaren Chemikalien 2-Propanol und Aceton (Fig. 4).

Eine ähnliche Aussage kann man jedoch im Fall der Güte (Fig. 3) der Resonanz nicht treffen. Dargestellt ist die reziproke Güte in Abhängigkeit vom Abstand des Probenbehälters (unterer Rand der Flasche) zum Resonator. In diesem Fall tritt eine wahllos erscheinende Abfolge aus genießbaren und ungenießbaren Flüssigkeiten auf.

Fig. 5 zeigt ein besonders vorteilhaftes Verfahren mit abschließender Darstellung der Resonanzfrequenz in Abhängigkeit von der reziproken Güte 1/Q bei verschiedenen Abständen des Probenbehälters vom Resonator. Fig. 5 zeigt deutlich, dass der reziproke Gütefaktor weitgehend proportional zur gemessenen Veränderung der Resonanzfrequenz durch die Probe ist, und daher die Messung bei unterschiedlichen Abstandwerten zu einem weitgehend linearen Zusammenhang zwischen Resonanzfrequenz und reziproker Güte führt. In der Praxis bedeutet dies eine sehr schnelle und exakte Identifizierung der Flüssigkeit.

Vorzugsweise sollte der Abstand zwischen Probenbehälter und Resonator in einem Bereich zwischen 0 und 5 Millimeter liegen. Dies entspricht bei den in Fig. 5 gezeigten Geraden jeweils den sechs Werten mit höchsten reziproken Güten und Resonanzfrequenzen. Daraus resultieren Güten zwischen etwa 100 und 1000 für die meisten Flüssigkeiten (Fig. 5). Güten in diesem Wertebereich sind leicht messbar und die Selektivität bei der Unterscheidung verschiedener Flüssigkeiten sehr gut.

Der grau unterlegte Bereich stellt dabei den Bereich der genießbaren Flüssigkeiten dar. Neben den in den Fig. 3 und 4 dargestellten Flüssigkeiten sind in der Fig. 5 als zusätzliche Alkoholika Pernod, Gin, sowie ein beliebiges Parfüm dargestellt. Daneben sind als zusätzliche Chemikalien Ethanol, Chloroform sowie die Säuren Salzsäure und Phosphorsäure durchgemessen worden.

Die Ergebnisse lassen folgende Schlüsse zu:

1. Der Bereich der genießbaren Flüssigkeiten ist eng. Eine unbekannte Flüssigkeit ist daher schnell und sicher in genießbar bzw. ungenießbar bzw. gefährlich und ungefährlich einzuteilen.

2. Der Bereich der genießbaren Flüssigkeiten weist Geraden mit positiver Steigung auf.

3. Die Steigungen der Kurven bei den genießbaren Flüssigkeiten ist weitgehend unabhängig vom Material (Glas, Plastik) und von der genauen Form der Flaschen, und auch durch ein Papier oder Kunststoff-Etikett nicht beeinflussbar.

4. Brennbare Flüssigkeiten weisen deutlich abweichende Steigungen auf, die eine klare Unterscheidung ermöglichen.

5. Außerhalb des Bereiches der genießbaren Flüssigkeiten weisen positive Steigungen auch Säuren auf. Die dafür ermittelten Geraden weisen eine größere Steigung auf als die genießbaren Flüssigkeiten.

6. Außerhalb des Bereiches der genießbaren Flüssigkeiten weisen positive Steigungen auch Aceton in Glas sowie Ethanol in Kunststoff auf. Die dafür ermittelten Geraden weisen eine kleinere Steigung auf als die genießbaren Flüssigkeiten.

7. Negative Steigungen treten bei allen anderen ungenießbaren Flüssigkeiten sowie bei leeren Flaschen aus PET und Glas auf.

Als allgemeines Ergebnis der Erfindung lässt sich daher festhalten, dass es klare physikalische Parameter und deren Darstellungen gibt, die eine schnelle und zuverlässige Identifikation einer Probe in einem geschlossenen Behälter ermöglichen.

Die bei den brennbaren Flüssigkeiten beobachteten Abhängigkeiten der Kurven vom Flaschenmaterial und das Auftreten negativer Steigungen können qualitativ wie folgt erklärt werden. Bei Wasser entsteht die beobachtete Zunahme der Resonanzfrequenz mit Annäherung der Flasche dadurch, dass zunehmend elektrische Feldenergie in ein Medium mit hoher Dielektrizitätskonstanten umverteilt wird, was zu einer Zunahme der elektrischen Feldenergie führt (positive Steigung). Die magnetische Feldenergie spielt dabei offensichtlich nur eine geringe Rolle. Bei Flüssigkeiten mit geringerer Dielektrizitätskonstante überwiegt der Effekt der effektiven Verringerung des elektrischen Feldvolumens durch Teilreflektion an der Flasche, was zu einer Zunahme der Resonanzfrequenz führt (negative Steigung). Deshalb beobachtet man auch eine negative Steigung für eine leere Flasche. Je nach dem, welcher Effekt überwiegt, kann das Vorzeichen der Steigung auch vom Flaschenmaterial abhängen, wie bei Aceton beobachtet.

Es ist aufgrund der starken Frequenzabhängigkeit von ε für Flüssigkeiten im Mikrowellen-Frequenzbereich zu erwarten, dass sich bei anderen Frequenzen ein anderes Bild ergibt. So ist z. B. zu erwarten, dass sich bei einer Anregungsfrequenz im Bereich von 5-10 GHz eine klare Differenzierung von alkoholischen Getränken gemäß ihrem Alkoholgehalt ergibt.

Aufgrund der Tatsache, dass die in Fig. 5 gezeigten Kurven Geraden sind, die sich in einem Punkt (nämlich bei dem $f$ und $1/Q$ Wert des Resonators ohne Flasche) schneiden, kann jede Flüssigkeit durch die Messung bei lediglich einem Abstandswert vollständig charakterisiert werden. Eine solche Messung ist in einem Zeitraum von ca. 100 Millisekunden durchführbar. Aufgrund dieser Tatsache eignet sich dass Verfahren zur Identifikation des Inhaltes nichtmetallischer Flaschen beim "Check-In" in Flughäfen.

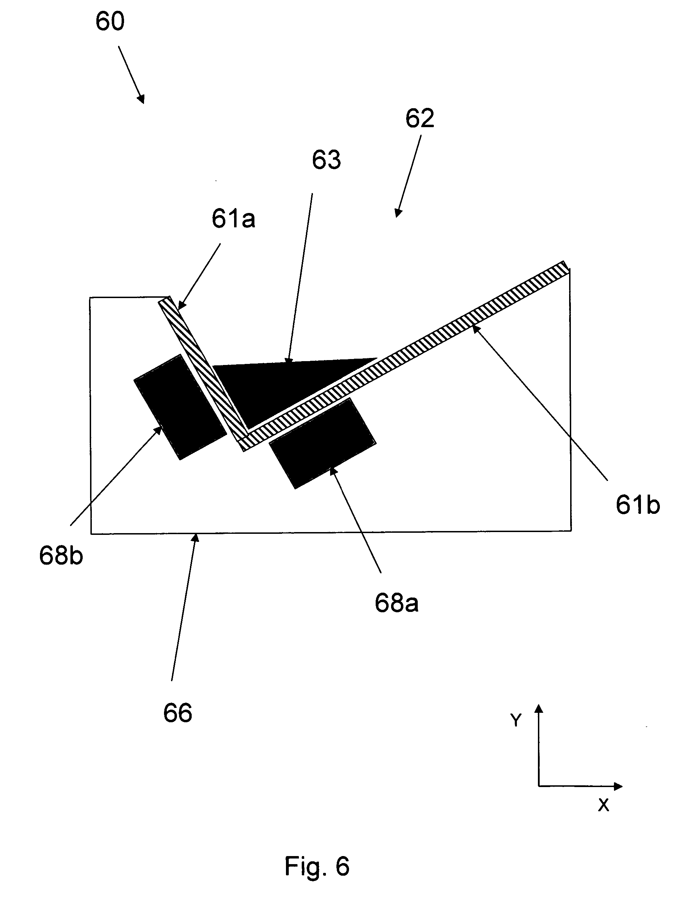

Fig. 6 zeigt schematisch eine weitere vorteilhafte Ausführungsform der erfindungsgemäßen Vorrichtung.

Darin ist die Halterung 61a, 61b derartig in der erfindungsgemäßen Vorrichtung 60 angeordnet, dass ein auf dem abgeschrägten Teil 61 b der Halterung angeordneter Probenbehälter, hier eine Flasche 62, mit seiner Längsachse einen Winkel von 30 Grad mit der Horizontalen X einschließt.

Die Flasche 62 wird auf die abgeschrägte Fläche 61 b der Halterung gelegt, und deren Position von unten durch eine senkrecht dazu stehende Auflagefläche 61a fixiert. In diesem Fall sind zwei Resonatoren 68a, 68b, einer mit der Blende parallel zur abgeschrägten Fläche (68a), der zweite senkrecht dazu unterhalb des Flaschenbodens, (68b) angeordnet.

Die Identifikation des Flascheninhalts, also der Probe 63, erfolgt sowohl durch die Seitenwände der jeweiligen Flasche als auch durch den Flaschenboden. Die Auflageflächen 61 a, 61 b der Halterung für die Flasche 62, unterhalb der sich die Resonatoren befinden, bestehen aus einem für die evaneszenten Mikrowellenfelder transparenten Material, z. B. aus Teflon.

Vorteilhaft an dieser Anordnung 60 ist, dass einerseits bei nur teilweise gefüllten Flaschen 62 der unter der abgeschrägten Fläche 61b der Halterung angebrachte Resonator 68a ein möglichst großes Volumen der Probe 63 erfasst, was zur Erhöhung der Genauigkeit und Reproduzierbarkeit der Messung beiträgt. Andererseits dient der unter dem Flaschenboden angeordnete Resonator 68b vorteilhaft der Identifikation von Proben in Flaschen mit geringem Durchmesser. In dem in Fig. 6 dargestellten Fall beträgt der Winkel zwischen der abgeschrägten Auflagefläche 61b zur Horizontalen X 30 Grad. Die Resonatoren 68a, 68b sind in dem Gehäuse 66 untergebracht.

Zweites Ausführungsbeispiel:

Die zur Zeit mittels eines Netzwerkanalysators durchgeführten Messungen könnten mit einer auf der Basis von Standardkomponenten für Mobilfunk und Mikroelektronik zu entwickelnden Elektronikschaltung realisiert werden. Dies würde die Konstruktion extrem kompakter und kostengünstiger Prüfgeräte ermöglichen.

Die Integration derartiger Elektronik und Resonatoren in einem Gehäuse stellt die Voraussetzung für den Bau sogenannter Handscanner bereit. Ein derartiger Handscanner könnte z. B. mittels Akkumulatoren betrieben werden und als mobiles Gerät zur Untersuchung von Proben eingesetzt werden.

Drittes Ausführungsbeispiel:

Ein weiteres Anwendungsgebiet ist die Bestimmung des Wassergehaltes in Baumaterialien, z. B. zur Kontrolle der Lagerzeit von Holz. Auch ließe sich die Methode zur Untersuchung von verpackten Lebensmitteln einsetzen. Für die Landwirtschaft könnte die Methode zur Bestimmung des Wassergehaltes in Getreidekörnern verwendet werden. Im Bereich medizinischer Anwendungen wären Messungen des Wassergehaltes der Haut (Hydration) denkbar.

Es ist selbstverständlich, dass der Durchmesser der Öffnung im metallischen Gehäuse für die verwendete Schwingungsmode jeweils zu optimieren ist. Der Resonator wird jeweils in einer Schwindungsmode mit geringen Abstrahlungsverlusten angeregt.

Es ist denkbar, dass für andere Anwendungen als die hier genannten, auch die Ermittlung der Güte an Stelle der Ermittlung der Resonanzfrequenz ausreichend ist für eine eindeutige Identifikation der Probe.

Ein Verfahren zur Identifikation einer Probe in einem Behälter sieht dann die Schritte vor:

- der Behälter mit der Probe wird zu einem Resonator angeordnet,
- in den Resonator wird ein Hochfrequenzsignal zur Anregung einer resonanten Mode des Resonators eingekoppelt,
- die Resonanzkurve mindestens einer resonanten Mode wird gemessen, und
- aus der ermittelten Veränderung der Güte im Vergleich zu einer Messung ohne Probenbehälter wird die Probe identifiziert. Eine erfindungsgemäße Vorrichtung zur Identifikation einer Probe in einem Probenbehälter umfasst mindestens einen Resonator und eine Halterung für einen Probenbehälter, sowie ein erstes Mittel zur Anregung einer resonanten Mode des mindestens einen Resonators, wobei der Resonator und die Halterung für einen Probenbehälter derartig zueinander angeordnet sind, dass nach der Anregung einer resonanten Mode des Resonators das resonante elektrische Feld des Resonators eine Probe in einem Probenbehälter zumindest partiell zu durchdringen vermag, sowie ein zweites Mittel zur Messung der durch die Probe veränderten Resonanzkurve des Resonators. Die Vorrichtung weist ein drittes Mittel zur Ermittlung der Güte auf.

**Patentansprüche**

1. Verfahren zur Identifikation einer Probe in einem Behälter mit den Schritten:

   - der Behälter mit der Probe wird zu einem dielektrischen Resonator (8) angeordnet,
   - in den Resonator wird ein Hochfrequenzsignal zur Anregung einer resonanten Mode des Resonators eingekoppelt,
   - die Resonanzkurve mindestens einer resonanten Mode wird gemessen,
   - es wird zusätzlich die Güte ermittelt und zur Resonanzfrequenz in Beziehung gesetzt,
   - wobei der dielektrische Resonator in einem metallischen Gehäuse (6) angeordnet ist und angeregt wird,
   - und eine Öffnung des metallischen Gehäuses in Richtung des Probenbehälters (2) ausgerichtet wird,
   - so dass die elektromagnetischen Felder in den Außenraum eindringen können und zumindest partiell die Probe (3) in dem Probenbehälter zu durchdringen vermögen und
   - aus der ermittelten Veränderung und Darstellung der Beziehung aus der reziproken Güte und der Resonanzfrequenz im Vergleich zu einer Messung ohne Probenbehälter die Probe identifiziert wird.

2. Verfahren nach Anspruch 1,
   **gekennzeichnet durch**
   Wahl einer flüssigen Probe.

3. Verfahren nach Anspruch 1,
   **gekennzeichnet durch**
   Wahl einer festen Probe.

4. Verfahren nach einem der vorhergehenden Ansprüche,
   **dadurch gekennzeichnet, dass**
   die $TE_{01\delta}$-Mode, und / oder weitere $TE_0$ Moden und / oder Whispering Gallery-Moden des Resonators angeregt werden.

5. Verfahren nach einem der vorhergehenden Ansprüche,
   **gekennzeichnet durch**
   Wahl eines Probenbehälters aus Glas oder Plastik oder Keramik mit oder ohne einer Teilmetallisierung und mit oder ohne Etikett.

6. Verfahren nach einem der vorhergehenden Ansprüche,
**dadurch gekennzeichnet, dass**
der Probenbehälter während der Messung verschlossen bleibt.

7. Verfahren nach einem der vorhergehenden Ansprüche,
**dadurch gekennzeichnet, dass**
zur Identifikation der Probe mehrfache Messungen der Resonanzkurven zur Ermittlung der Veränderung von Resonanzfrequenz und gegebenenfalls Güte des Resonators durchgeführt werden.

8. Verfahren nach vorhergehendem Anspruch,
**dadurch gekennzeichnet, dass**
die mehrfachen Messungen mit jeweils verschiedenem Abstand der Probe zum Resonator durchgeführt werden.

9. Verfahren nach vorhergehendem Anspruch,
**dadurch gekennzeichnet, dass**
dabei die Position des Resonators zur Veränderung des Abstandes zu dem Probenbehälter verschoben wird oder umgekehrt.

10. Verfahren nach einem der vorhergehenden Ansprüche,
**dadurch gekennzeichnet, dass**
mehrfache Messungen durchgeführt werden, bei denen verschiedene resonante Moden eines Resonators angeregt werden.

11. Verfahren nach vorhergehendem Anspruch,
**dadurch gekennzeichnet, dass**
durch Ermittlung von Resonanzfrequenz und Güte mehrerer Moden die Eindeutigkeit und Selektivität bei der Identifikation erhöht wird.

12. Verfahren nach einem der vorhergehenden Ansprüche,
**dadurch gekennzeichnet, dass**
die resonanten Moden mehr als eines Resonators angeregt werden.

13. Verfahren nach einem der vorhergehenden Ansprüche,
**dadurch gekennzeichnet, dass**
verschiedene resonante Moden in baugleichen Resonatoren angeregt werden.

14. Verfahren nach einem der vorhergehenden Ansprüche,
**dadurch gekennzeichnet, dass**
die gleichen resonanten Moden in bauungleichen Resonatoren angeregt werden.

15. Vorrichtung zur Identifikation einer Probe (3) in einem Probenbehälter (2),
umfassend mindestens einen dielektrischen Resonator (8) und eine Halterung (61 a, 61 b) für einen Probenbehälter (2), sowie ein erstes Mittel zur Anregung einer resonanten Mode des mindestens einen Resonators, wobei der Resonator und die Halterung für den Probenbehälter derartig zueinander angeordnet sind, dass nach der Anregung einer resonanten Mode des Resonators das resonante elektrische Feld des Resonators eine Probe in einem Probenbehälter zumindest partiell zu durchdringen vermag, sowie ein zweites Mittel zur Messung der durch eine Probe veränderten Resonanzkurve des Resonators,
**dadurch gekennzeichnet, dass**
der dielektrische Resonator in einem metallischen Gehäuse (6) mit mindestens einer Öffnung angeordnet ist, wobei die zum Behälter gerichtete Öffnung des Gehäuses für elektromagnetische Felder des Resonators durchlässig ist und die Vorrichtung ein drittes Mittel zur Ermittlung der Resonanzfrequenz umfasst, dass derartig ausgestaltet ist, dass es auch die durch die Probe veränderte Güte des Resonators ermitteln kann, und die auf Grund der Probe veränderte Güte des Resonators in den Kehrwert umwandeln und zu der Resonanzfrequenz in Beziehung setzen und darstellen kann.

16. Vorrichtung nach Anspruch 15,

**dadurch gekennzeichnet, dass**
das dritte Mittel derartig ausgestaltet ist, dass es die Resonanzfrequenz, die Beziehung aus Resonanzfrequenz und Güte und / oder die Beziehung aus Resonanzfrequenz und reziproker Güte in Abhängigkeit vom Abstand des Probenbehälters zum Resonator darstellen kann.

17. Vorrichtung nach einem der vorhergehenden Ansprüche 15 bis 16,
    **gekennzeichnet durch**
    eine Software als drittes Mittel.

18. Vorrichtung nach einem der vorhergehenden Ansprüche 15 bis 17,
    **gekennzeichnet durch**
    Mittel zur Veränderung des Abstands der Halterung für den Probenbehälter zum Resonator.

19. Vorrichtung nach einem der vorhergehenden Ansprüche 15 bis 18,
    **gekennzeichnet durch**
    einen Mikrowellenoszillator, insbesondere einen durchstimmbaren Mikrowellenoszillator oder einen breitbandigen Verstärker mit Resonator in Rückkoppelschaltung als erstes Mittel zur Anregung einer resonanten Mode.

20. Vorrichtung nach einem der vorhergehenden Ansprüche 15 bis 19,
    **gekennzeichnet durch**
    eine Detektordiode oder einen bolometrischen Leistungsdetektor oder einen Hetrerodyn-Empfänger als zweites Mittel zur Messung der Resonanzfrequenz und Güte des Resonators.

21. Vorrichtung nach einem der vorhergehenden Ansprüche 15 bis 20,
    **gekennzeichnet durch**
    einen Netzwerkanalysator.

22. Vorrichtung nach einem der vorhergehenden Ansprüche 15 bis 21,
    **gekennzeichnet durch**
    die Halterung für den Probenbehälter mindestens zwei V-förmige Nuten aufweist.

23. Vorrichtung nach Anspruch 15 bis 22,
    **gekennzeichnet durch**
    einen zylinderförmigen dielektrischen Resonator.

24. Vorrichtung nach einem der vorhergehenden Ansprüche 15 bis 23,
    **dadurch gekennzeichnet, dass**
    der Resonator zentralsymmetrisch in dem metallischen Gehäuse angeordnet ist.

25. Vorrichtung nach einem der vorhergehenden Ansprüche 15 bis 24,
    **dadurch gekennzeichnet, dass**
    das metallische Gehäuse zylinderförmig ausgeführt ist.

26. Vorrichtung nach einem der vorhergehenden Ansprüche 15 bis 25,
    **gekennzeichnet durch**
    eine zentrale, kreiszylindrische Blende als Öffnung im metallischen Gehäuse.

27. Vorrichtung nach einem der vorhergehenden Ansprüche 15 bis 26,
    **dadurch gekennzeichnet, dass**
    der Behälter für die Probe und das Gehäuse derartig zueinander positioniert sind, dass der tiefste Punkt des Behälters oberhalb der Mitte der Öffnung des Gehäuses bzw. des Resonators angeordnet ist.

28. Vorrichtung nach einem der vorhergehenden Ansprüche 15 bis 27,
    **gekennzeichnet durch**
    mehrere Resonatoren, welche zur Aufnahme verschiedener Probenbehälter eine Messstation mit einer Vielzahl an baugleichen und / oder bauungleichen Resonatoren ausbilden.

29. Vorrichtung nach einem der vorhergehenden Ansprüche 15 bis 28,

**dadurch gekennzeichnet, dass**
mehrere Resonatoren derartig angeordnet sind, dass sie die Form des Probenbehälters abbilden.

30. Vorrichtung nach einem der vorhergehenden Ansprüche 15 bis 29,
**dadurch gekennzeichnet, dass**
die Halterung für den Probenbehälter derartig in der Vorrichtung angeordnet ist, dass ein darin angeordneter Probenbehälter bezüglich seiner Längsachse schräg zur Horizontalen angeordnet ist.

31. Vorrichtung nach vorhergehendem Anspruch,
**dadurch gekennzeichnet, dass**
ein in der Halterung angeordneter Probenbehälter bezüglich seiner Längsachse einen Winkel von etwa 20 bis 50 Grad mit der Horizontalen einnimmt.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4342505 C1
- DE 4004119 A1

- DD PS138468

**In der Beschreibung aufgeführte Nicht-Patentliteratur**

- **E. Wehrsdorfer.** Ein Dielektrizitätskonstanten-Messplatz zur Untersuchung optischer Kristalle im Mikrowellenbereich. *Kristall und Technik,* 1975, vol. 10 (6), 695-700